# EUROPÄISCHE PATENTANMELDUNG

(11) **EP 1 188 715 A1**
(43) Veröffentlichungstag der Anmeldung: **20.03.2002**
(21) Anmeldenummer: 01121830.2
(22) Anmeldetag: 11.09.2001
(51) Int. Cl.: C01B 31/22

(54) **Vorrichtung und Verfahren zur Erzeugung von Kohlendioxidschnee**

(30) Priorität: 14.09.2000 DE 10045869
(71) Anmelder: TV Kohlensäure, Technik und Vertrieb GmbH + Co., 67063 Ludwigshafen (DE)
(72) Erfinder: Büst, Wolfgang, 67117 Limburgerhof (DE)
(74) Vertreter: Kasseckert, Rainer

(57) **Zusammenfassung**

Die Erfindung betrifft eine Vorrichtung und ein Verfahren zur Erzeugung von Kohlendioxidschnee mit mindestens einer Düse (11) zur Expansion des Kohlendioxids, sowie einem Prallelement (3), das als rotationssymmetrischer Hohlkörper (3) ausgebildet ist, wobei die Anbringung der mindestens einen Düse (11) relativ zu dem Prallelement (3) so vorgesehen ist, dass ein aus der Düse (11) austretender Kohlendioxidstrahl so gerichtet ist, dass er parallel zu einer Tangente an den rotationssymmetrischen Hohlkörper (3) strahlt, und zwar parallel verschoben in Richtung zum Drehpunkt oder zur Rotationsachse des Prallelements (3) hin, wobei die Wandung des Prallelements (3) eine Aussparung (4) zum Ableiten von Kohlendioxidgas aufweist, wobei gasförmiges Kohlendioxid über die Aussparung (4) in der Wandung des Prallelements (3) abgeführt wird.

## Beschreibung

Die Erfindung betrifft eine Vorrichtung zur Erzeugung von Kohlendioxidschnee, die mit einer Quelle für flüssiges Kohlendioxid verbindbar ist, und mindestens eine Düse zur Expansion des Kohlendioxids aufweist, sowie ein Prallelement aufweist.

Die Erfindung betrifft des Weiteren ein Verfahren zur Erzeugung von Kohlendioxidschnee, wobei flüssiges Kohlendioxid aus einer Quelle über eine Düse strömt und expandiert und wobei der aus der Düse austretende Kohlendioxidstrahl auf ein Prallelement geleitet wird.

Eine herkömmliche Einrichtung zur Erzeugung von Kohlendioxidschnee ist aus der Druckschrift DE 197 16 844 bekannt. Bei dieser Vorrichtung ist eine zyklonförmige Schneekammer und ein Abzugsrohr für gasförmiges Kohlendioxid vorgesehen.

Weiterhin ist aus der Druckschrift US 1,546,682 eine zylinderförmige Schneekammer bekannt, in die Kohlendioxid eingedüst wird.

Bekannt ist aus der Druckschrift US 5,511,379 außerdem, dass flüssiges Kohlendioxid durch den Einsatz einer Düse und einer Prallplatte in Kohlendioxidschnee und Kohlendioxidgas umgewandelt werden kann.

Bei der Erzeugung von Kohlendioxidschnee aus flüssigem Kohlendioxid entsteht durch Entspannung etwa 50 % Kohlendioxidschnee und 50 % gasförmiges Kohlendioxid. Das gasförmige Kohlendioxid wird zur Vermeidung von einem Druckaufbau im Bereich der Schneeerzeugung in der Regel abgeleitet. Eine Druckerhöhung ist u. a. deswegen unerwünscht, weil mit steigendem Druck die Ausbeute an Kohlendioxidschnee sinkt. Die herkömmlichen Methoden und Vorrichtungen zur Erzeugung von Kohlendioxid sind im Bezug auf die erwünschte Ableitung des gasförmigen Kohlendioxids nicht befriedigend.

Der Erfindung liegt daher die Aufgabe zugrunde, eine einfache und effektive Ableitung des gasförmigen Kohlendioxids bei der Erzeugung von Kohlendioxidschnee sowie beim Einsatz von Kohlendioxidschnee zur Kühlung zu gewährleisten.

Diese Aufgabe wird vorrichtungsseitig dadurch gelöst, dass das Prallelement als rotationssymmetrischer Hohlkörper ausgebildet ist, sowie die Anbringung der mindestens einen Düse relativ zu dem Prallelement so vorgesehen ist, dass ein aus der Düse austretender Kohlendioxidstrahl so gerichtet ist, dass er parallel zu einer Tangente an den rotationssymmetrischen Hohlkörper strahlt, und zwar parallel verschoben in Richtung zum Drehpunkt oder zur Rotationsachse des Prallelements hin, wobei die Wandung des Prallelements eine Aussparung zum Ableiten von Kohlendioxidgas aufweist. Der Kohlendioxidstrahl prallt somit bevorzugt in der beschriebenen Weise auf das Prallelement, wodurch die Entstehung von Kohlendioxidschnee wesentlich begünstigt wird.

Bevorzugt ist als Prallelement ein rotationssymmetrischer Hohlkörper vorgesehen, der eine Rotationsachse aufweist und in Richtung der Rotationsachse an beiden Enden des Hohlkörpers Öffnungen aufweist. Dabei dienen die Öffnungen vor allem der Ableitung von Gas, besonders von gasförmigem Kohlendioxid, das in der Vorrichtung zur Erzeugung von Kohlendioxidschnee anfällt.

Besonders bevorzugt ist zum Ableiten von Gas, insbesondere von gasförmigem Kohlendioxid, eine Saugeinrichtung vorgesehen, insbesondere ist ein Ventilator vorgesehen.

Vorteilhaft ist die mindestens eine Düse an einem Düsenrohr angeordnet, das mit der Quelle für flüssiges Kohlendioxid verbindbar ist.

Eine Weiterbildung der Erfindung sieht vor, dass das Düsenrohr parallel zur Rotationsachse des als Prallelement eingesetzten Hohlkörpers angeordnet ist.

Gemäß einer bevorzugten Ausführungsform der Erfindung ist das Düsenrohr vertikal in der Vorrichtung angeordnet, wobei die oberste Düse unterhalb der Unterkante der Aussparung in der Wandung des Prallelements angeordnet ist. Dadurch wird verhindert, dass der aus der Düse austretende Kohlendioxidstrahl durch die Aussparung direkt in das Innere des Prallelements gelangt und abgesaugt wird. Besonders bevorzugt ist das Düsenrohr vertikal verstellbar ausgeführt, wodurch die Anzahl der Kohlendioxid eindüsenden Düsen veränderbar ist. Mit dieser Ausführung des Düsenrohres ist die Menge des zugeführten Kohlendioxids vorteilhaft einstellbar.

Zweckmäßigerweise sind die mindestens eine Düse und das Prallelement von einem Gehäuse umgeben, insbesondere von einem isolierten Gehäuse, das insbesondere zumindest an der Innenseite zyklonförmig ausgebildet ist.

Verfahrensseitig wird die gestellte Aufgabe dadurch gelöst, dass zur Erzeugung von Kohlendioxidschnee ein rotationssymmetrischer Hohlkörper als Prallelement eingesetzt wird, wobei der Kohlendioxidstrahl entlang einer Parallelen zu einer Tangente an den rotationssymmetrischen Hohlkörper geführt wird, und zwar in Richtung zum Drehpunkt oder zur Rotationsachse des Prallelements hin parallel verschoben, wobei der Kohlendioxidstrahl in eine Rotationsbewegung um das Prallelement herum versetzt wird, wobei gasförmiges Kohlendioxid über eine Aussparung in der Wandung des Prallelements abgeführt wird.

Vorteilhafterweise wird das gasförmige Kohlendioxid über die Aussparung in der Wandung in das Innere des Prallelements geleitet und nach oben abgeführt.

Bevorzugt wird gasförmiges Kohlendioxid über Öffnungen an den Enden eines eine Rotationsachse aufweisenden als Prallelement eingesetzten Hohlkörpers abgeführt.

Besonders bevorzugt erfolgt die Trennung von gasförmigem Anteil und Feststoffanteil dadurch, dass das Gas geleitet von den Druckverhältnissen von der Düse wegströmt und der Feststoffanteil der Schwerkraft gehorchend nach unten sinkt.

Besonders bevorzugt wird zum Abführen des gasförmigen Kohlendioxids eine Saugeinrichtung eingesetzt, insbesondere wird ein Ventilator als Saugeinrichtung eingesetzt.

Vorteilhafterweise wird der Kohlendioxidschnee in einer Rotationsbewegung um das Prallelement herum in einem Gehäuse, insbesondere in einem isolierten Gehäuse, das insbesondere zumindest an der Innenseite zyklonförmig ausgebildet ist, nach unten geleitet. Die einer Rotationsbewegung folgenden und sich gleichzeitig nach unten bewegenden Kohlendioxidschneepartikel werden durch die Reibungsverluste an der Innenwand des Gehäuses gebremst. Durch die bevorzugte konische Verengung bis hin zur Austrittsöffnung für den Kohlendioxidschnee wird die Sinkgeschwindigkeit stark reduziert. Dadurch wird eine sanfte Ausgabe der Kohlendioxidschneepartikel und eine drucklose Beaufschlagung von einem abzukühlenden Produkt mit Kohlendioxidschnee ermöglicht.

Zweckmäßigerweise wird der Kohlendioxidschnee auf ein zu kühlendes Produkt, insbesondere auf zu kühlende Lebensmittel, aufgebracht. Es empfiehlt sich, dass der Kohlendioxidschnee mit dem zu kühlenden Produkt vermischt wird.

Mit besonderem Vorteil wird das durch Sublimation von Kohlendioxidschnee entstehende gasförmige Kohlendioxid über die Aussparung und die Öffnungen im Prallelement aus einer Vorrichtung zur Erzeugung von Kohlendioxidschnee abgeführt.

Insgesamt wird vorteilhafter Weise das gesamte anfallende Kohlendioxidgas bei der erfindungsgemäßen Erzeugung von Kohlendioxidschnee kontrolliert abgeführt, so dass eine Exposition von Arbeitskräften an eine erhöhte Kohlendioxidkonzentration am Arbeitsplatz zuverlässig verhindert wird.

Von besonderem Vorteil ist die Verwendung der Vorrichtung zur Erzeugung von Kohlendioxidschnee in Einrichtungen zum Kühlen von Lebensmitteln, insbesondere in Teigknetmaschinen oder in Vorrichtungen zum Kuttern von Fleisch (zum Beispiel in Mischern, Rührern, Knetern oder Reaktoren). Beim Produktionsablauf wird die Produkterwärmung durch Zugabe von Kohlendioxidschnee kompensiert. Durch die Wärmeaufnahme sublimiert zumindest ein Tei des Kohlendioxidschnees. Das dabei entstehende gasförmige Kohlendioxid wird aus der Vorrichtung abgeführt.

Der Kohlendioxidschnee wird vorteilhaft durch die untere Öffnung des Gehäuses auf ein zu kühlendes Produkt gestreut. Besonders vorteilhaft führt der Kohlendioxidstrahl, der durch die Rotationsbewegung und damit einhergehender Reibungsverluste an der Innenwand des Gehäuses gebremst wird und darüber hinaus durch die teilweise zyklonförmige Ausgestaltung der Innenwand des Gehäuses eine Verminderung der Sinkgeschwindigkeit der Kohlendioxidschneepartikel erfährt, zu einer im Wesentlichen druckentspannten Beaufschlagung des zu kühlenden Produktes mit Kohlendioxidschnee.

Die Erfindung bietet zwei große Vorteile: Zum einen wird das gasförmige Kohlendioxid zuverlässig aus der Vorrichtung zur Erzeugung von Kohlendioxidschnee entfernt. Zum anderen ist die dazu erforderliche Lösung konstruktiv einfach und damit kostengünstig herzustellen.

Weitere Vorteile und Einzelheiten werden anhand des in den Figuren dargestellten Ausführungsbeispiels näher erläutert.

Die Figur 1 zeigt eine erfindungsgemäße Vorrichtung zur Erzeugung von Kohlendioxidschnee.

Die Figur 2 zeigt eine Schnittdarstellung entlang der Achse A-A durch das Prallelement und das Düsenrohr.

Die Figur 3 zeigt eine Schnittdarstellung entlang der Achse B-B durch das Prallelement.

Die Figur 4 zeigt eine Seitenansicht des Prallelements 3 senkrecht zur Achse B-B.

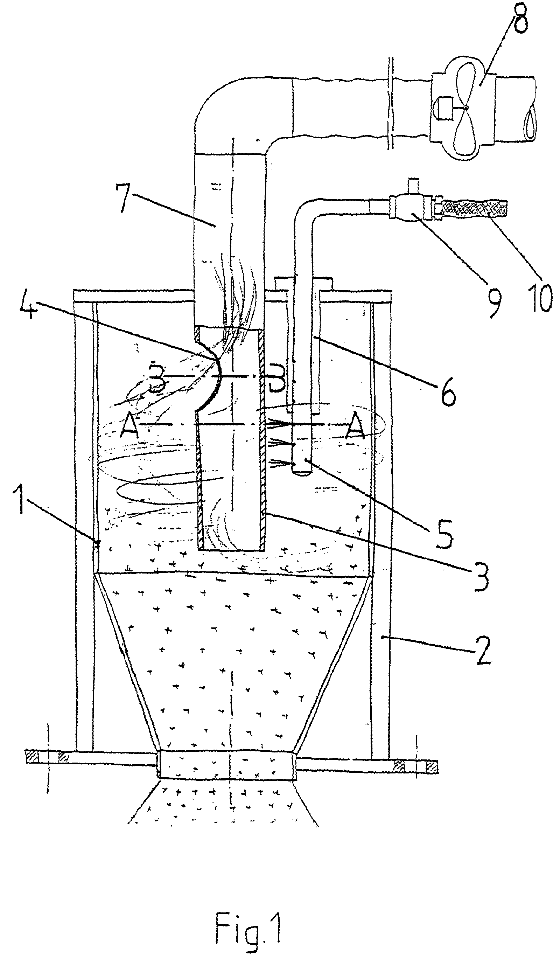

In der Figur 1 ist ein Schneerohrgehäuse 1 mit einem das Schneerohrgehäuse 1 umgebenden Thermoschutz 2 dargestellt. Erfindungsgemäß erstreckt sich im Zentrum des Schneerohrs 1, das im oberen Teil zylindrisch geformt ist und im unteren Teil konisch zuläuft, das Prallelement 3, das die Aussparung 4 aufweist. Bevorzugt ist die Aussparung 4 kreisförmig ausgebildet. Das Prallelement 3 ist in diesem Beispiel als oben und unten offener Zylinder gezeigt, dessen Mantelfläche die Aussparung 4 aufweist. Parallel zum Prallelement 3 ist das Düsenrohr 5 angeordnet, das im oberen Teil in einer Hülse 6 steckt, die die oberen Düsen verschließt. Die Hülse 6 erstreckt sich dabei mindestens bis zum unteren Rand der Aussparung 4. Dadurch wird verhindert, dass Kohlendioxid auf der Höhe der Aussparung 4 eingedüst wird. Die Eindüsung des Kohlendioxids erfolgt nur unterhalb des unteren Endes der Aussparung 4, um zu verhindern, dass eingedüstes Kohlendioxid sofort wieder über die Aussparung 4 abgezogen wird. Die Absaugung des gasförmigen Kohlendioxids erfolgt über einen an die obere Öffnung des zylinderförmigen Prallelements 3 anschließenden Absaugstutzen 7, durch den das Kohlendioxidgas von einem Gebläse 8, beispielsweise einem stufenlos regelbarem Axialventilator 8, angesaugt und über eine Rohrleitung ins Freie befördert wird. Eventuell über die Aussparung 4 mit eingesaugte Kohlendioxidschneepartikel treten an der unteren Öffnung des Prallelementes 3 wieder aus. dadurch wird ermöglicht, dass annähernd die gesamte am Prallelement 3 produzierte Schneemenge für Anwendungen des Kohlendioxidschnees zur Verfügung steht.

Das Düsenrohr 5 ist über ein Magnetventil 9 mit einer Zuleitung 10 für flüssiges Kohlendioxid verbunden. Am unteren Ende des konischen Teils des Schneerohrs 1 wird der Kohlendioxidschnee ausgegeben und beispielsweise in eine Teigknetmaschine eingebracht. Zu diesem Zweck kann die erfindungsgemäße Vorrichtung vorteilhaft an den Deckel einer Teigknetmaschine angeflanscht werden. Vorteilhafterweise ist das Düsenrohr 5 vertikal verstellbar ausgebildet, wodurch die produzierte Menge an Kohlendioxidschnee variiert werden kann, und zwar unabhängig von der Öffnungsfrequenz des Magnetventils 8. Die Arretierung der vertikalen Einstellung erfolgt beispielsweise mittels einer als Spannzylinder 6 ausgebildeten Hülse 6.

Besonders vorteilhaft ist das Schneerohr 1 aus Edelstahl gefertigt und mit einem Thermoschutz 2 umgeben. Durch die Isolierung wird verhindert, dass Luftfeuchte außen am Schneerohr 1 kondensiert und auf ein abzukühlendes Produkt tropft. Dies stellt im Hinblick aus die Hygiene, die vor allem bei der Abkühlung von Lebensmitteln eine große Rolle spielt, einen wesentlichen Vorteil dar.

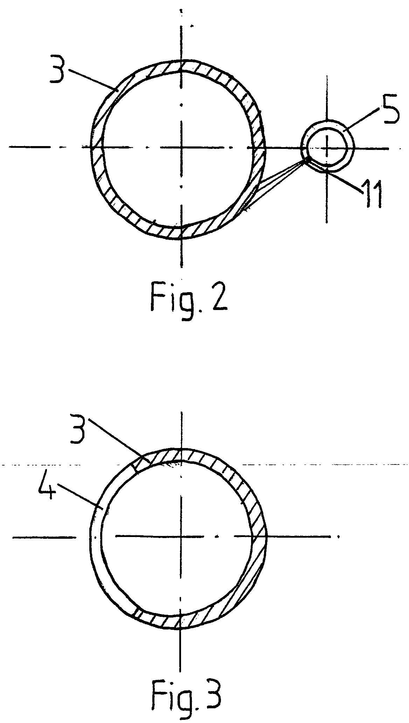

In der Figur 2 ist eine Schnittdarstellung entlang der Achse A-A (s. Figur 1) gezeigt, aus der die Lage des Prallelements 3 und des Düsenrohrs 5 zueinander deutlich wird. Der Mittelstrahl des aus der Düse 11 austretende Kohlendioxidstrahls fällt entlang einer zu einer Tangente an das Prallelement parallel verschobenen Geraden auf das Prallelement. Die Strahlaufweitung ist so gering, dass annähernd die gesamte Menge des aus der Düse 11 austretenden Kohlendioxids auf das Prallelement trifft.

In der Figur 3 ist eine andere Schnittdarstellung entlang der Achse B-B (s. Figur 1) gezeigt, in der die geschnittene Wandung des Prallelements 3, sowie ein Teil der die Aussparung 4 begrenzenden Kante der Wandung des Prallelements 3 zu sehen ist.

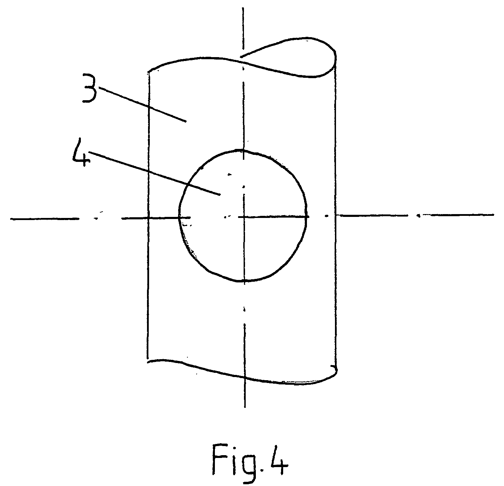

Die Figur 4 zeigt eine Seitenansicht des Prallelements 3 senkrecht zur Achse B-B. Dabei ist zu sehen, dass die Aussparung 4 beispielsweise kreisförmig gestaltet ist.

Die Steuerung der Zugabe von flüssigem Kohlendioxid erfolgt vorteilhaft über die Temperatur des abzukühlenden Produkts als Regel- oder Steuergröße. Diese wird beispielsweise mit einem Infrarotsensor erfasst und von einem Steuergerät registriert und angezeigt. Die Schaltpunkte zur gewünschten Produkttemperatur sind dabei in weiten Grenzen einstellbar. In der Grundeinstellung ist zum Beispiel eine intermittierende Dosierung des flüssigen Kohlendioxids bereits vorgesehen. Die zur optimalen Kühlung erforderlichen Zeitintervalle der intermittierenden Dosierung, die von dem abzukühlenden Produkt und dessen Menge abhängen, sind am Steuergerät vorteilhaft frei einstellbar.

## Patentansprüche

1. Vorrichtung zur Erzeugung von Kohlendioxidschnee, die mit einer Quelle für flüssiges Kohlendioxid verbindbar ist, und mindestens eine Düse (11) zur Expansion des Kohlendioxids aufweist, sowie ein Prallelement (3) aufweist, **dadurch gekennzeichnet, dass** das Prallelement (3) als rotationssymmetrischer Hohlkörper (3) ausgebildet ist, sowie die Anbringung der mindestens einen Düse (11) relativ zu dem Prallelement (3) so vorgesehen ist, dass ein aus der Düse (11) austretender Kohlendioxidstrahl so gerichtet ist, dass er parallel zu einer Tangente an den rotationssymmetrischen Hohlkörper (3) strahlt, und zwar parallel verschoben in Richtung zum Drehpunkt oder zur Rotationsachse des Prallelements (3) hin, wobei die Wandung des Prallelements (3) eine Aussparung (4) zum Ableiten von Kohlendioxidgas aufweist.

2. Vorrichtung nach Anspruch 1, **dadurch gekennzeichnet, dass** als Prallelement (3) ein rotationssymmetrischer Hohlkörper (3) vorgesehen ist, der eine Rotationsachse aufweist und in Richtung der Rotationsachse an beiden Enden des Hohlkörpers Öffnungen aufweist.

3. Vorrichtung nach Anspruch 1 oder 2, **dadurch gekennzeichnet, dass** zum Ableiten von Gas, insbesondere von gasförmigem Kohlendioxid, eine Saugeinrichtung (8) vorgesehen ist, insbesondere ein Ventilator (8) vorgesehen ist.

4. Vorrrichtung nach einem der Ansprüche 1 bis 3, **dadurch gekennzeichnet, dass** die mindestens eine Düse (11) an einem Düsenrohr (5) angeordnet ist, das mit der Quelle für flüssiges Kohlendioxid verbindbar ist.

5. Vorrichtung nach Anspruch 4, **dadurch gekennzeichnet, dass** das Düsenrohr (5) parallel zur Rotationsachse des als Prallelement (3) vorgesehenen Hohlkörpers (3) angeordnet ist.

6. Vorrichtung nach Anspruch 4 oder 5, **dadurch gekennzeichnet, dass** das Düsenrohr (5) vertikal in der Vorrichtung angeordnet ist, wobei die oberste Düse (11) unterhalb der Unterkante der Aussparung (4) in der Wandung des Prallelements (3) angeordnet ist.

7. Vorrichtung nach einem der Ansprüche 1 bis 6, **dadurch gekennzeichnet, dass** die mindestens eine Düse (11) und das Prallelement (3) von einem Gehäuse (1) umgeben sind, insbesondere von einem isolierten Gehäuse (1), das insbesondere zumindest an der Innenseite zyklonförmig ausgebildet ist.

8. Verfahren zur Erzeugung von Kohlendioxidschnee, wobei flüssiges Kohlendioxid aus einer Quelle über eine Düse (11) strömt und expandiert und wobei der aus der Düse (11) austretende Kohlendioxidstrahl auf ein Prallelement (3) geleitet wird, **dadurch gekennzeichnet, dass** ein rotationssymmetrischer Hohlkörper (3) als Prallelement (3) eingesetzt wird, wobei der Kohlendioxidstrahl entlang einer Parallelen zu einer Tangente an den rotationssymmetrischen Hohlkörper (3) geführt wird, und zwar in Richtung zum Drehpunkt oder zur Rotationsachse des Prallelements (3) hin parallel verschoben, wobei der Kohlendioxidstrahl in eine Rotationsbewegung um das Prallelement (3) herum versetzt wird, wobei gasförmiges Kohlendioxid über eine Aussparung (4) in der Wandung des Prallelements (3) abgeführt wird.

9. Verfahren nach Anspruch 8, **dadurch gekennzeichnet, dass** gasförmiges Kohlendioxid über Öffnungen an den Enden eines eine Rotationsachse aufweisenden als Prallelement (3) eingesetzten Hohlkörpers (3) abgeführt wird.

10. Verfahren nach einem der Ansprüche 8 oder 9, **dadurch gekennzeichnet, dass** zum Abführen des gasförmigen Kohlendioxids eine Saugeinrichtung (8) eingesetzt wird, insbesondere ein Ventilator (8) als Saugeinrichtung (8) eingesetzt wird.

11. Verfahren nach einem der Ansprüche 8 bis 10, **dadurch gekennzeichnet, dass** der Kohlendioxidschnee in einer Rotationsbewegung um das Prallelement (3) herum in einem Gehäuse (1), insbesondere in einem isolierten Gehäuse (1), das insbesondere zumindest an der Innenseite zyklonförmig ausgebildet ist, nach unten geleitet wird.

12. Verfahren nach Anspruch 11, **dadurch gekennzeichnet, dass** der Kohlendioxidschnee auf ein zu kühlendes Produkt, insbesondere auf zu kühlende Lebensmittel, aufgebracht wird.

13. Verfahren nach Anspruch 12, **dadurch gekennzeichnet, dass** der Kohlendioxidschnee mit dem zu kühlenden Produkt vermischt wird.

14. Verfahren nach einem der Ansprüche 12 oder 13, **dadurch gekennzeichnet, dass** das durch Sublimation von Kohlendioxidschnee entstehende gasförmige Kohlendioxid über die Aussparung (4) und die Öffnungen im Prallelement (3) aus einer Vorrichtung zur Erzeugung von Kohlendioxidschnee abgeführt werden.
